# FASCICULE DE BREVET EUROPEEN

(11) **EP 0 594 514 B1**
(45) Date de publication et mention de la délivrance du brevet: **29.05.1996**
(21) Numéro de dépôt: 93420402.5
(22) Date de dépôt: 14.10.1993
(51) Int. Cl.: F16D 66/02

(54) **Témoin d'usure de plaquette de frein pour véhicule automobile**
Kraftfahrzeugbremsbelag Abnutzungswarnsensor
Automotive brake lining wear detector

(30) Priorité: 20.10.1992 FR 9212821
(43) Date de publication de la demande: 27.04.1994
(73) Titulaire: COMPAGNIE FRANCAISE DE CABLAGE, F-21000 Dijon (FR)
(72) Inventeur: Scrabalat, Philippe, F-38180 Seyssins (FR)
(74) Mandataire: Laurent, Michel

(56) Documents cités:
- FR-A- 2 566 495
- GB-A- 2 156 925
- GB-A- 2 194 824

## Description

L'invention concerne un témoin d'usure de plaquettes de frein pour véhicule automobile.

De manière connue, de tels témoins se présentent sous la forme d'un câble électrique, comportant un matériau isolant à son extrémité, venant se fixer au niveau de la plaquette dont on désire détecter l'usure. Lorsque la plaquette s'use, et atteint le fil électrique, il se crée un contact générant un signal électrique, susceptible de matérialiser, notamment au niveau du tableau de bord du véhicule, l'usure de la plaquette. Un tel témoin est décrit dans le document FR-A-2 566 495.

Cet embout, destiné à venir se fixer au niveau d'un siège ménagé à cet effet dans la zone postérieure de la plaquette est généralement réalisé en PPS (polysulfure de phénylène), en polyamide 6,6, en polyamide 46, en polyether ethercétone (PEEK), en PTFE (polytétrafluoroéthylène) injectable, ou en tout autre matériau présentant des caractéristiques thermiques et mécaniques au moins équivalentes. Cet embout est généralement surmoulé sur l'extrémité du câble électrique, lui-même gainé notamment de polychlorure de vinyl (PVC), voire en polytétrafluoroéthylène (PTFE). La réalisation de ces témoins est difficilement automatisable, compte tenu du fait que la fixation effective du témoin sur la plaquette s'effectue par coopération de l'embout avec une rondelle-frein insérée préalablement sur le câble, avant le surmoulage de l'embout. En effet, une telle rondelle-frein, du fait de sa trop grande légèreté et de sa faible épaisseur est difficilement distribuable en automatique, et donc, ne permet pas d'aboutir à une fiabilité à 100 % de la réalisation de ces témoins d'usure.

Afin de permettre le fixation de ces témoins d'usure, on connaît également le principe d'un embout, généralement réalisé en polytétrafluoréthylène, destiné à être collé sur l'extrémité du câble gainé de polychlorure de vinyl (PVC) et susceptible d'être clipsé par l'arrière sur le siège prévu à cet effet dans la partie postérieure de la plaquette. Néanmoins, cette opération notamment de collage n'est pas automatisable, car outre le contrôle du bon positionnement de l'extrémité du câble, il importe de s'assurer de la fixation effective de l'embout sur le câble. En outre, il est connu que les plaquettes, lors de leur utilisation au contact des disques de freins, sont portées à des températures relativement élevées. De la sorte, il importe d'utiliser des matériaux, et donc notamment des colles, susceptibles de résister à ces températures. Seules les colles bi-composants peuvent donc être utlisées pour cette application, mais elles sont d'un coût relativement élevé, grevant de la sorte le prix de fabrication de tels témoins d'usure. En effet, les colles traditionnelles ne résistent pas ou résistent mal en température.

De plus, afin d'obtenir un signal fiable et ne se déclenchant pas de manière intempestive, il importe de s'assurer de l'étanchéité du collage pour éviter tout risque d'introduction d'eau au niveau de l'extrémité non gainée du fil. Or, lorsque l'on utilise de la colle, on n'est jamais à l'abri de bulles d'air venant s'insérer entre la colle et le matériau que l'on désire coller, de sorte que l'étanchéité n'est pas assurée à 100 %.

Enfin, de tels embouts sont de fabrication relativement onéreuse, puisqu'ils sont généralement obtenus par la technique dite du décolletage.

L'objet de l'invention est de pallier tous ces différents inconvénients. Elle propose un témoin d'usure pour plaquettes de frein dans lequel l'embout est fixable très facilement sans nécessiter de collage, et susceptible de présenter une résistance à l'arrachement supérieure ou égale à cinquante newtons. En outre, l'un des autres buts de l'invention est de proposer un système de fixation dudit embout ne nécessitant pas le changement d'embout en fonction du type de plaquette utilisée, ni en fonction de la gamme de température à laquelle ladite plaquette est susceptible de monter.

Enfin, l'invention propose un embout fixable sur l'extrémité du câble de manière automatique et étanche.

Ce témoin d'usure de plaquettes de frein pour véhicule automobile comprend un câble électrique gainé en matière plastique, destiné à acheminer un signal électrique signalant l'usure de la plaquette et comportant à l'une de ses extrémités un embout susceptible d'être clipsé au niveau d'un siège réalisé à cet effet dans la plaquette, ledit embout présentant un orifice central destiné à recevoir le câble.

Selon l'invention, cet embout présente au niveau de la face interne de son orifice central un taraudage sur partie au moins de sa longueur, destiné à permettre son vissage sur la gaine plastique du câble.

En d'autres termes, l'invention consiste non plus à fixer par tout moyen tel qu'adhésif, colle, etc... voire surmoulage l'embout sur l'extrémité du câble, mais au contraire, à aboutir à cette fixation par simple vissage, notamment en force de l'embout sur la gaine PVC du câble. En fait, il s'agit de jouer sur la très faible dureté de la gaine PVC, permettant au taraudage de l'orifice central de l'embout de mordre et partant d'assurer une fixation efficace et étanche, compte tenu de l'effet "force" exercé par ledit vissage sur la gaine PVC. Pour ce faire, le diamètre du taraudage est légèrement inférieur au diamètre de la gaine PVC afin d'assurer la compression et l'accrochage du pas de vis sur la dite gaine.

Cet embout est obtenu par moulage par injection puis devissage hors du moule, et notamment par voie hydraulique.

L'embout est avantagement réalisé en un matériau choisi dans le groupe comprenant le polytétrafluoroéthylène (PTFE) injectable, le polyamide 6,6 (NYLON - marque déposée), le polyamide 46, le polysulfure de phénylène, le polyether ethercétone, et tout autre matériau présentant des caractéristiques thermiques et mécaniques au moins équivalentes.

Il comporte une collerette de fixation située aux environs du milieu de sa longueur, et destinée à prendre appui contre la périphérie de l'orifice du siège de la plaquette. Il comporte en outre sur la zone opposée à la zone de fixation un jonc de clipsage, destiné à coopérer avec le siège de la plaquette.

La manière dont l'invention peut être réalisée et les avantages qui en découlent ressortiront mieux de l'exemple de réalisation qui suit à titre indicatif et non limitatif à l'appui des figures annexées.

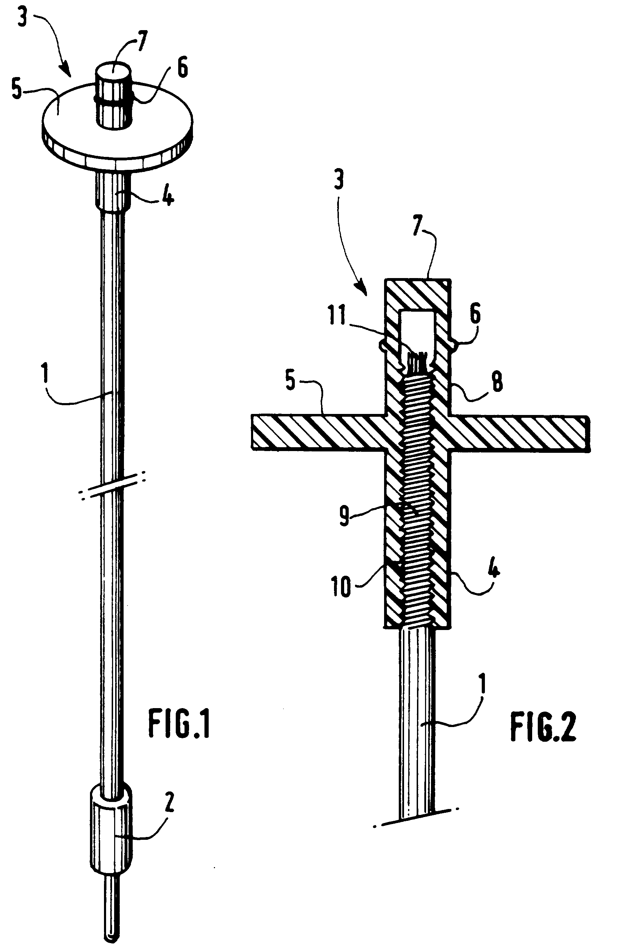

La figure 1 est une représentation schématique simplifiée du témoin d'usure conforme à l'invention.

La figure 2 est une vue en coupe dudit embout destiné à venir s'adapter sur le témoin conformément à l'invention.

Le témoin conforme à l'invention comporte fondamentalement un câble électrique (1) isolé au moyen d'une gaine plastique (4), typiquement réalisée en PVC. L'une des extrémités de ce câble reçoit une prise mâle (2), destinée à s'enficher dans la prise femelle correspondante du tableau de bord ou d'un circuit relai, destiné à acheminer l'information matérialisant l'usure de la plaquette concernée, notamment au tableau de bord du véhicule considéré.

Cet embout (3) comporte fondamentalement une collerette (5) destinée à prendre appui sur la face arrière de la plaquette, c'est à dire sur la face opposée à la face comportant le matériau de friction, tel que commercialisé sous la marque déposée Ferodo, et plus précisément sur la périphérie de l'orifice du siège réalisé dans ladite face postérieure.

L'embout comporte en outre deux zones respectivement (9) et (11), colinéaires et de diamètre sensiblement équivalent, la zone (11) comportant un jonc (6) destiné à permettre le clipsage de l'embout (3), par coopération avec le périmètre de la sortie de l'orifice du siège. En d'autres termes, la distance séparant la collerette (5) du jonc (6) correspond à l'épaisseur du siège de la plaquette au niveau duquel vient se fixer cet embout.

L'extrémité opposée (9) de cette partie (11), colinéaire à cette dernière est destinée à venir se visser sur le câble (1), et plus exactement sur la gaine PVC (4) du câble (1). Pour ce faire, l'orifice (7) dudit embout (3) comporte un taraudage (10) s'étendant sur une bonne partie de la longueur dudit embout, et est destiné à venir mordre sur le gaine PVC de l'embout. Ainsi, compte tenu du diamètre du taraudage (10) inférieur à celui de la gaine PVC du câble (1), celui-ci est centré automatiquement, et en outre sa fixation par un taraudage dont le pas est particulièrement réduit, typiquement 0,5 à 0,6 mm, est optimisée, rendant tout risque de dévissage intempestif impossible.

Compte tenu de cette fixation par vissage, l'opération proprement dite de fixation est très aisément automatisable par les machines et autres outils disponibles à ce jour. De fait, outre une augmentation significative des cadences de réalisation, on n'observe plus de défaut de collage inhérent aux procédés de fabrication antérieurs.

Cet embout est typiquement réalisé en PTFE c'est à dire en polytétrafluoréthylène injectable, sans nécessiter de reprise ultérieure. Le dévissage de l'embout ainsi moulé hors de l'empreinte du moule s'effectue de manière traditionnelle par voie hydraulique ou pneumatique bien connue de l'homme de métier. Le câble est ainsi vissé sur une longueur typique de 15 mm, mais cette longueur peut varier en fonction de la côte d'allumage voulue par les constructeurs, c'est à dire du degré d'usure devant être détecté, et pouvant également varier en fonction de l'utilisation des freins.

Le témoin d'usure conforme à l'invention, qui compte tenu même de ce procédé de fabrication, présente un embout dont la résistance à l'arrachement hors du câble est supérieure ou égale à 150 Newtons. De plus, compte tenu de la faible valeur du pas de vis, on obtient une très bonne étanchéité, suffisante pour éviter tout risque d'introduction d'eau au niveau de l'extrémité non gainée (11) du câble.

En outre, de par le procédé de fixation utilisé, on obtient un centrage automatique du câble dans l'embout, permettant donc d'aboutir à des témoins d'usure de très bonne qualité.

On conçoit donc que les témoins d'usure conforme à l'invention s'affranchissent des différents inconvénients abordés dans le préambule, et surtout, permettent une automatisation tant de leur réalisation proprement dite que de leur fixation, générant de fait des gains de productivité conséquents.

## Revendications

1. Témoin d'usure de plaquettes de frein pour véhicule automobile comprenant un câble électrique (1) isolé dans une gaine (4) en matière plastique, et destiné à acheminer un signal électrique signalant l'usure de la plaquette à laquelle il est fixé, et comportant à l'une de ses extrémités un embout (3) susceptible d'être clipsé au niveau d'un siège réalisé à cet effet dans ladite plaquette, ledit embout (3) présentant un orifice central (7) destiné à recevoir le câble (1), **caractérisé** en ce que l'embout (3) présente au niveau de la face interne de son orifice central (7) un taraudage (10) sur partie au moins de sa longueur, destiné à permettre son vissage sur la gaine plastique (4) du câble (1).

2. Témoin d'usure selon la revendication 1, **caractérisé** en ce que le diamètre du taraudage (10) est inférieur au diamètre de la gaine (4) du câble (1).

3. Témoin d'usure selon l'une des revendications 1 et 2, **caractérisé** en ce que l'embout (3) est obtenu par moulage par injection puis devissage hors du moule, et notamment par voie hydraulique ou pneumatique.

4. Témoin d'usure selon l'une des revendications 1 à 3, **caractérisé** en ce que l'embout est réalisé en un matériau choisi dans le groupe comprenant le polytétrafluoroéthylène injectable, le polyamide 6,6, le polyamide 46, le polysulfure de phénylène, le polyether ethercétone.

5. Témoin d'usure selon l'une des revendications 1 à 4, **caractérisé** en ce que l'embout (3) présente une collerette de fixation (5), située aux environs du milieu de sa longueur, et destinée à prendre appui contre la périphérie de l'orifice du siège de la plaquette.

6. Témoin d'usure selon l'une des revendications 1 à 5, **caractérisé** en ce que l'embout comporte sur la zone opposée (11) à la zone (9) de fixation sur le câble (1) un jonc de clipsage (6), issu de moulage, destiné à coopérer avec le siège de la plaquette.

## Patentansprüche

1. Bremsbelag-Abnutzungssensor für Kraftfahrzeuge, der ein Elektrokabel (1) umfaßt, welches mit einem Kunststoffmantel (4) isoliert ist und zur Weiterleitung eines elektrischen Signals zur Signalisierung der Abnutzung des Belags, an dem das Kabel befestigt ist, bestimmt ist und welches an einem seiner Enden ein Ansatzstück (3) aufweist, das im Bereich eines zu diesem Zweck an dem genannten Belag ausgeführten Sitzes aufrastbar ist, wobei das genannte Ansatzstück (3) eine zentrale, zur Aufnahme des Kabels (1) bestimmte Öffnung (7) aufweist, **dadurch gekennzeichnet**, daß das Ansatzstück (3) im Bereich der Innenseite seiner zentralen Öffnung (7) ein Innengewinde (10) mindestens auf einem Teil seiner Länge aufweist, welches dazu bestimmt ist, sein Aufschrauben auf den Kunststoffmantel (4) des Kabels (1) zu ermöglichen.

2. Abnutzungssensor nach Anspruch 1, **dadurch gekennzeichnet**, daß der Durchmesser des Innengewindes (10) geringer ist als der Durchmesser des Mantels (4) des Kabels (1).

3. Abnutzungssensor nach einem der Ansprüche 1 und 2, **dadurch gekennzeichnet**, daß das Ansatzstück (3) durch Spritzguß und nachfolgendes Herausschrauben aus der Form, insbesondere auf hydraulischem oder pneumatischem Weg, erhalten wird.

4. Abnutzungssensor nach einem der Ansprüche 1 bis 3, **dadurch gekennzeichnet**, daß das Ansatzstück aus einem Werkstoff hergestellt wird, der aus der Gruppe ausgewählt wird, welche spritzfähiges Polytetrafluorethylen, Polyamid 6,6, Polyamid 46, Phenylenpolysulfid, Polyetheretherketon umfaßt.

5. Abnutzungssensor nach einem der Ansprüche 1 bis 4, **dadurch gekennzeichnet**, daß das Ansatzstück (3) einen nahe der Mitte seiner Länge gelegenen Befestigungsflansch (5) aufweist, welcher dazu vorgesehen ist, gegen den Rand der Öffnung im Sitz des Belags zur Anlage zu kommen.

6. Abnutzungssensor nach einem der Ansprüche 1 bis 5, **dadurch gekennzeichnet**, daß das Ansatzstück auf dem Bereich (11) gegenüber dem Bereich (9) zur Befestigung auf dem Kabel (1) einen durch Gußformung erhaltenen Rastring (6) aufweist, der mit dem Sitz des Belags zusammenwirken soll.

## Claims

1. Automotive pad wear detector comprising an electrical cable (1) insulatingly mounted within a sheath (4) formed of plastics material, and adapted to conduct an electrical signal signalling wear of the brake pad to which it is fixed, and having at one of its ends a ferrule (3) adapted to be snap-fitted level with a seat formed for this purpose in said pad, said ferrule (3) having a central orifice (7) and adapted to receive the cable (1), characterised in that the ferrule (3) has level within the internal face of its central orifice (7) a screw thread (10) extending part of the way along its length, adapted to permit its screw fixing on the plastic sheath (4) of the cable (1).

2. Wear detector according to Claim 1, characterised in that the diameter of the screw threading (10) is less than the diameter of the sheath (4) of the cable (1).

3. Wear detector according to one of Claims 1 and 2, characterised in that the ferrule (3) is obtained by injection moulding and then removal from the mould, particularly by hydraulic or pneumatic means.

4. Wear detector according to one of Claims 1-3, characterised in that the ferrule is formed in a material chosen from the group comprising injectable polytetrafluoroethylene, 6,6 polyamide, 46 polyamide, phenylene polysulphide, polyether etherketone.

5. Wear detector according to one of Claims 1-4, characterised in that the ferrule (3) as a fixing flange (5), located approximately half way along its length, and adapted to lodge against the periphery of the seating orifice of the pad.

6. Wear detector according to one of Claims 1-5, characterised in that the ferrule (3) has on its area (11) opposite the fixing area (9) on the cable (1) a snap-fixing ring (6), formed by moulding, and adapted to cooperate with the seat on the pad.
